# EUROPÄISCHE PATENTANMELDUNG

(11) **EP 1 052 830 A2**
(43) Veröffentlichungstag der Anmeldung: **15.11.2000**
(21) Anmeldenummer: 00108381.5
(22) Anmeldetag: 17.04.2000
(51) Int. Cl.: H04M 1/60

(54) **Mobilfunk-Endgerät**

(30) Priorität: 20.04.1999 DE 19917892
(71) Anmelder: SIEMENS AKTIENGESELLSCHAFT, 80333 München (DE)
(72) Erfinder: Plattner, Christian, 81673 München (DE)

(57) **Zusammenfassung**

Mobilfunk-Endgerät (1) mit einem Empfangsteil (5), das eine NF-Stufe und eine mit deren Ausgang verbundene elektrodynamische Lautsprechereinrichtung (19) aufweist, und einem Sendeteil (7), das eine Sendeendstufe (9) aufweist, mit einer Kompensationsanordnung (21) zur Kompensation einer Störspannung, welche aus äußeren, insbesondere von der Sendeendstufe ausgehenden, und auf die Lautsprechereinrichtung einwirkenden Streufeldern resultiert.

## Beschreibung

Die Erfindung betrifft ein Mobilfunk-Endgerät nach dem Oberbegriff des Anspruchs 1.

Ein Mobilfunk-Endgerät ( 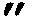 Handy") weist - wie jedes Telefon - eine üblicherweise als Hörkapsel bezeichnete Lautsprechereinrichtung auf, die bei praktisch allen auf dem Markt befindlichen Mobiltelefonen auf dem elektrodynamischen Prinzip beruht. Eine solche Lautsprechereinrichtung weist bekanntlich eine mit einer Schwingmembran verbundene Tauchspule auf, die mit dem Ausgang der empfangsseitigen NF-Stufe verbunden ist und in der der Ausgangsstrom der NF-Stufe ein magnetisches Wechselfeld induziert, das die Spule zusammen mit der Schwingmembran zu mechanischen Schwingungen im Feld eines äußeren Magneten anregt. Diese Schwingungen erzeugen den dem NF-Signal entsprechenden Hörschall.

Durch relativ starke Magnetfelder in der Umgebung einer solchen Lautsprechereinrichtung werden in der Spule ebenfalls Spannungen induziert, die dem NF-Ausgangssignal überlagert werden und (bei Frequenzen im Hörbereich) eine hörbare Störung bewirken.

In dieser Hinsicht besonders störungsgefährdet sind die Hörkapseln von Mobiltelefonen. Zum einen fließen in der Sendeendstufe eines Mobiltelefons im Sendebetrieb impulsförmige Ströme mit relativ hoher Stromstärke mit der Taktfrequenz des Mobilfunksystems sowie mit einem hohen Anteil von Oberwellen bis in den Bereich hoher Hörfrequenzen hinein. Bei einem nach dem GSM-Standard arbeitenden Mobilfunk-Endgerät liegt die der Taktfrequenz des Systems entsprechende Grundfrequenz bei 217 Hz, und es treten akustisch wahrnehmbare Oberwellen bis in den Bereich von 8 bis 10 kHz auf. Die hohen Impuls-Ströme speziell bei Mobilfunk-Endgeräten ergeben sich aufgrund der digitalen Betriebsweise der Mobilfunksysteme einerseits und der niedrigen Betriebsspannungen andererseits, die zur Erzielung vorgegebener Sendeleistungen relativ hohe Stromstärken erfordern. In modernen Systemen, die mit weiter verringerten Versorgungsspannungen konzipiert sind, werden noch höhere Stromstärken als in heutigen Sendeendstufen auftreten.

Zum anderen bedingen die geringen Abmessungen eines Mobiltelefons eine enge räumliche Nachbarschaft von Hörkapsel und Sendeendstufe, so daß die aus den hohen Stromstärken in der Sendeendstufe resultierenden starken magnetischen Wechselfelder dem Bereich der Hörkapsel noch mit einem hohen magnetischen Fluß durchsetzen und dort Störspannungen induzieren.

Da geringe Abmessungen, eine geringe Masse und niedrige Kosten zu den vorrangigen Entwurfszielen bei der Entwicklung von Mobiltelefonen zählen, sind die dem Fachmann bekannten Maßnahmen zur Verringerung der Störwirkung, nämlich die Vergrößerung des Abstandes zwischen der Sendeendstufe als Störquelle und der Hörkapsel als Störsenke oder die magnetische Abschirmung der Hörkapsel, hier praktisch ausgeschlossen. Eine wirksame Abschirmung der Hörkapsel würde einen Aufbau aus mehreren Schichten Metall mit hoher Permeabilitätskonstante ( 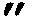 µ-Metall") mit beträchtlicher Dicke erfordern. Ein solcher Aufbau würde Masse und Abmessungen des Mobiltelefons deutlich erhöhen, und seine Realisierung würde einen erheblichen konstruktiven Aufwand erfordern und zu einer deutlichen Erhöhung der Material- und Fertigungskosten führen.

Der Erfindung liegt daher die Aufgabe zugrunde, ein verbessertes Mobilfunk-Endgerät anzugeben, bei dem von der Sendeendstufe ausgehende akustische Störungen ohne nennenswerte Erhöhung des Konstruktionsaufwandes und von Gewicht, Abmessungen und Kosten des Gerätes weitgehend ausgeschlossen sind.

Diese Aufgabe wird durch ein Mobilfunk-Endgerät mit den Merkmalen des Anspruchs 1 gelöst.

Die Erfindung schließt den wesentlichen Gedanken ein, unter bewußter Abkehr von den 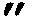 klassischen" Vorgehensweisen einer Vergrößerung des Abstandes zwischen Störquelle und Störsenke oder einer magnetischen Abschirmung der Störquelle und/oder Störsenke einen starken Einfluß der Störquelle (hier: Sendeendstufe) im Raumbereich der Störsenke (hier: Lautsprechereinrichtung bzw. Hörkapsel) durchaus zuzulassen, aber im Bereich der Störsenke eine Kompensation vorzusehen. Dieses Vorgehen könnte man den bekannten 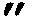 passiven" Störunterdrükkungsmaßnahmen als 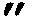 aktive" Störbefreiung gegenüberstellen - auch wenn diese, wie weiter unten ausgeführt wird, im wesentlichen mit passiven Bauelementen erfolgen kann.

Regelungstechnisch betrachtet umfaßt die vorgeschlagene Kompensationsanordnung einen Störsignalaufnehmer (Sensor) und ein eingangsseitig mit diesem verbundenes Kompensationsglied (Aktuator). In einer bevorzugten Ausführung sind diese Elemente in einer zur Lautsprecherspule der Lautsprechereinrichtung in Reihe geschalteten, in enger räumlicher Nachbarschaft zu dieser angeordneten und mit entgegengesetzter Polarität gewickelten Kompensationsspule realisiert.

In vorteilhafter Weise umfaßt die Kompensationsandordnung Einstellmittel zur Einstellung der Kompensationswirkung, die eine spezifische Anpassung der Anordnung an die konkreten Einbauverhältnisse, die Feldstärke der Störstrahlung etc. ermöglichen.

Diese Einstellmittel können in einfacher und kostengünstiger Weise durch einen parallel zur Kompensationsspule geschalteten Widerstand gebildet sein, der insbesondere einstellbar ist.

Eine weitgehende Störbefreiung ist aber auch bereits ohne derartige Einstellmittel, allein mit einer für die konkrete Handy-Konstruktion geeignet dimensionierten und angeordneten Kompensationsspule erzielbar.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
- Fig. 1: ein vereinfachtes Funktions-Blockschaltbild eines Mobilfunk-Endgerätes in einer Ausführungsform,
- Fig. 2: eine Prinzipskizze einer bevorzugten Ausführung der Streufeld-Kompensationseinrichtung nach Fig. 1 und
- Fig. 3: eine Prinzipskizze der räumlichen Anordnung einer Kompensationsspule gemäß einer ersten Variante.

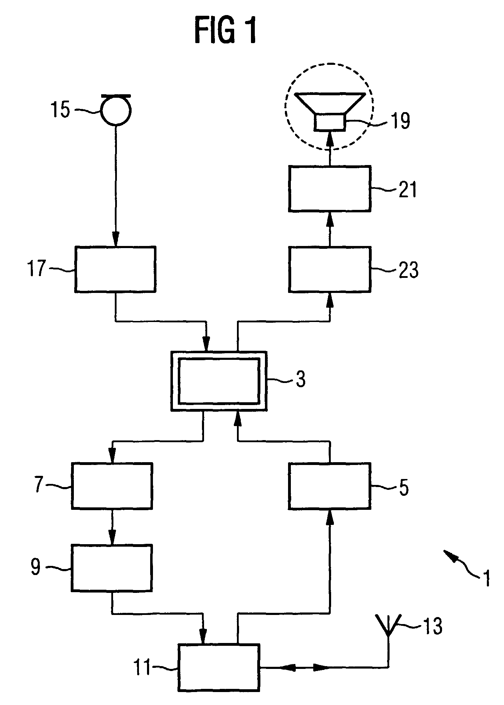

Fig. 1 zeigt - in einer die im Zusammenhang mit der Erfindung wesentlichen Funktionskomponenten hervorhebenden, vereinfachten Darstellung - ein Mobiltelefon 1, das in an sich bekannter Weise ein Steuerteil 3, ein HF-Empfangsteil 5, ein HF-Sendeteil 7, eine Sendeendstufe 9, einen Duplexer 11 sowie eine Antenne 13 aufweist. Weiterhin umfaßt das Mobiltelefon 1 ein Mikrofon bzw. eine Sprechkapsel 15, die über eine Mikrofonverstärkerstufe 17 mit einem Eingang des Steuerteils 3 verbunden ist, sowie einen Lautsprecher bzw. eine Hörkapsel 19, der/die über eine Streufeld-Kompensationseinrichtung 21 mit dem Ausgang einer NF-Stufe 23 verbunden ist, welche ihrerseits an einen Ausgang des Steuerteils 3 angeschlossen ist.

Das Steuerteil 3 umfaßt senderseitig bekannte Mittel zur Quellencodierung, Kanalcodierung und Verschachtelung (Interleaving) der über das Mikrofon 15 aufgenommenen Sprachsignale, denen empfängerseitig entsprechende Entschachtelungs-, Kanaldecodierungs- und Quellendecodierungsmittel zur Gewinnung eines tonfrequenten Ausgangssignals aus dem Empfangssignal entsprechen. Weiterhin umfaßt das Steuerteil 3 natürlich Mittel zur Steuerung der mit dem jeweiligen Mobilfunk-Standard konformen Funktionsabläufe des Mobiltelefons 1. Auch der Aufbau der übrigen Funktionseinheiten - mit Ausnahme der Streufeld-Kompensationseinrichtung 21 - ist an sich bekannt. Die Sendeendstufe 9 erzeugt im Sendebetrieb des Mobiltelefons 1, bedingt durch hohe Impuls-Stromstärken, relativ starke magnetische Wechselfelder, die aufgrund der räumlichen Nähe zur Hörkapsel 19 als Streustrahlung auf diese einwirken und in ihrer Schwingspule Störspannungen induzieren, die im Tonfrequenzbereich liegen.

Die zwischen die NF-Stufe 23 und die Hörkapsel 19 geschaltete Streufeld-Kompensationseinrichtung 21 steht ebenfalls unter dem Einfluß der von der Sendeendstufe 9 ausgehenden Streufelder, nimmt diese auf und kompensiert die in der Hörkapsel 19 entstehende Wirkung, indem sie eine Kompensationsspannung mit der Störspannung entsprechendem Zeitverlauf, aber entgegengesetzter Polarität liefert, so daß Kompensations- und Störspannung sich zu jedem Zeitpunkt im wesentlichen aufheben.

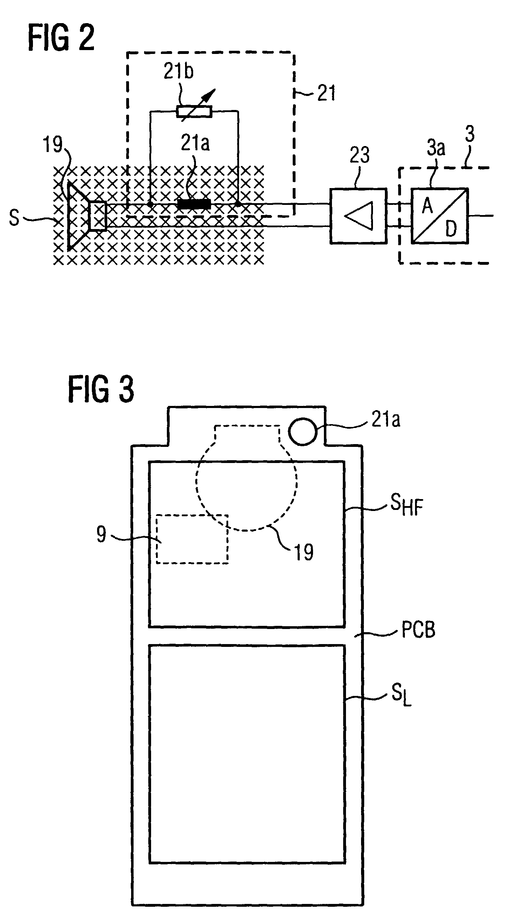

Fig. 2 illustriert in Form einer Prinzipskizze die Funktion einer bevorzugten Ausführung der Streufeld-Kompensationseinrichtung 21 nach Fig. 1 zusammen mit den schaltungsmäßig benachbarten Komponenten, nämlich einem D/A-Wandler 3a der Steuerstufe 3 und der diesem nachgeschalteten NF-Stufe 23 einerseits und dem Lautsprecher andererseits.

Die Streufeld-Kompensationseinrichtung 21 umfaßt demnach eine in Reihe mit der Lautsprecherwicklung geschaltete und derart gewickelte Kompensationsspule 21a, daß ein Streufeld S in dieser eine Spannung mit zur Störspannung in der Lautsprecherspule entgegengesetztem Vorzeichen erzeugt. In der dargestellten Ausführung umfaßt die Streufeld-Kompensationseinrichtung 21 einen einstellbaren Widerstand 21b in Parallelschaltung zur Kompensationsspule 21a, mit dem entsprechend der konkreten räumlichen Konfiguration des Mobiltelefons ein Abgleich der Amplitude der Kompensationsspannung dahingehend vorgenommen werden kann, daß diese der Störspannung in der Schwingspule des Lautsprechers 19 betragsmäßig entspricht. (In Ausführungen, in denen Aufbau und Positionierung der Kompensationsspule 21a spezifisch an die gegebene räumliche Konfiguration der Komponenten des Mobiltelefons angepaßt werden, kann der einstellbare Widerstand auch entfallen.)

Fig. 3 zeigt als Beispiel eine zweckmäßige räumliche Anordnung der Kompensationsspule 21a in Relation zur Sendeendstufe 9 und zur Hörkapsel 19 auf einer Leiterplatte PCB eines Mobiltelefons, beim dem separate Abschirmungen S_{HF} für die HF-Komponenten ( 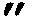 Funkteil") sowie S_{L} für die Logikkomponenten vorgesehen sind.

Alternativ zu der hier gezeigten Anordnung der Kompensationsspule in der Nähe der Hörkapsel, und zwar - bezogen auf die Lage der Sendeendstufe - auf der gegenüberliegenden Seite der Hörkapsel, kann die Kompensationsspule auch in unmittelbarer Nähe der Sendeendstufe innerhalb der Abschirmung des Funkteils angeordnet sein.

Auch hinsichtlich weiterer Merkmale ist die Ausführung der Erfindung nicht auf die oben beschriebenen Beispiele beschränkt, sondern auch in vielfältigen Abwandlungen möglich. Dies betrifft insbesondere auch die spezifische geometrische und wicklungsmäßige Ausführung der Kompensationsspule, die der Fachmann im Ergebnis einfacher Versuche geeignet wählen kann.

## Patentansprüche

1. Mobilfunk-Endgerät (1) mit einem Empfangsteil (5), das eine NF-Stufe und eine mit deren Ausgang verbundene elektrodynamische Lautsprechereinrichtung (19) aufweist, und einem Sendeteil (7), das eine Sendeendstufe (9) aufweist,
**gekennzeichnet durch**
eine Kompensationsanordnung (21) zur Kompensation einer Störspannung, welche aus äußeren, insbesondere von der Sendeendstufe ausgehenden, und auf die Lautsprechereinrichtung einwirkenden Streufeldern resultiert.

2. Mobilfunk-Endgerät nach Anspruch 1,
**dadurch gekennzeichnet,** daß
die Kompensationsanordnung (21) einen Störsignalaufnehmer und ein Kompensationsglied aufweist.

3. Mobilfunk-Endgerät nach Anspruch 1 oder 2,
**dadurch gekennzeichnet,** daß
die Kompensationsanordnung (21) eine mit einer Lautsprecherspule der Lautsprechereinrichtung (19) mit zu dieser entgegengesetzter Polarität in Reihe geschaltete und benachbart zu dieser angeordnete Kompensationsspule (21a) aufweist.

4. Mobilfunk-Endgerät nach Anspruch 2 und 3,
**dadurch gekennzeichnet,** daß
die Kompensationsspule (21a) zugleich im wesentlichen den Störsignalaufnehmer und das Kompensationsglied bildet.

5. Mobilfunk-Endgerät nach Anspruch 4,
**dadurch gekennzeichnet,** daß
die Kompensationsspule benachbart zur Lautsprechereinrichtung (19) oder zur Sendestufe (9) angeordnet ist.

6. Mobilfunk-Endgerät nach einem der vorangehenden Ansprüche,
**dadurch gekennzeichnet,** daß
die Kompensationsanordnung (21) Einstellmittel (21b) zur Einstellung der Kompensationswirkung aufweist.

7. Mobilfunk-Endgerät nach Anspruch 6,
**dadurch gekennzeichnet,** daß
die Einstellmittel einen zur Kompensationsspule parallel geschalteten, insbesondere einstellbaren, Widerstand (21b) aufweisen.
